# EUROPEAN PATENT APPLICATION

(11) **EP 1 186 725 A2**
(43) Date of publication of application: **13.03.2002**
(21) Application number: 01101373.7
(22) Date of filing: 22.01.2001
(51) Int. Cl.: E04C 5/01, E04C 5/07, E04G 23/02

(54) **Reinforcing method of concrete structure and reinforced concrete structure obtained thereby**

(30) Priority: 25.08.2000 JP 2000255883
(71) Applicant: Kabushiki Kaisha Nippankenkyusho, Yokohama-shi, Kanagawa 221-0045 (JP)
(72) Inventor: Ichikawa, Yoshio, c/o K.K. Nippankenkyusho, Yokohama-shi, Kanagawa 221-0045 (JP)
(74) Representative: Henkel, Feiler, Hänzel

(57) **Abstract**

A reinforcing method of a concrete structure comprising coating or impregnating a surface portion of the concrete structure with a composition containing (a) a quaternary ammonium silicate in an amount of 5 to 30 parts, in which SiO₂ is contained in an amount of 10% to 45% by weight, and (b) water in an amount of 95 to 70 parts, on a solid basis, wherein (a) + (b) = 100 parts by weight, thereby improving waterproofness, preventing neutralization, inhibiting chlorine ion permeation, improving resistance to freezing and thawing, increasing mechanical strength, and improving a deterioration prevention effect, durability and resistance to natural staining. A reinforced concrete structure obtained by the reinforcing method is also provided.

## Description

### FIELD OF THE INVENTION

The present invention relates to a reinforcing method of a concrete structure, and a reinforced concrete structure obtained by the reinforcing method. More particularly, the present invention relates to a method for improving resistance to natural staining (self-cleaning properties) which comprises coating or impregnating a surface portion of a concrete structure such as reinforced concrete, including a cement structure such as a formed article of a cement material, a formed plate thereof or a mortar-coated article with a specified composition to react it with calcium hydroxide of an ingredient of a cement composition, thereby improving density and hardness, preventing carbon dioxide, chlorides, nitrogen oxides or sulfates from invading, preventing deterioration due to freezing and thawing or aggregate reaction, and further imparting hydrophilicity to the concrete structure; and a reinforced concrete structure thus obtained by the method.

Further, the present invention relates to a method for repairing and reinforcing the above-mentioned concrete structure including the cement structure in a manner similar to the above-mentioned method.

### BACKGROUND OF THE INVENTION

As one of constructional materials, concrete and other cement materials have been well known. Concrete is generally a mixture obtained by kneading Portland cement, sand (a fine aggregate) and gravel with water. However, when the concrete and other cement materials are dried and hardened, cracks are liable to be developed by the difference in the coefficient of contraction to cause crazing. Also after hardening, various factors induce deterioration to result in the occurrence of crazing. The deteriorations of concrete structures and other cement structures widely known are as follows:
(1) Neutralization of cement alkalis with carbon dioxide in the air;
(2) Erosion due to chlorides, nitrogen oxides, sulfuric acid and sulfates;
(3) Crazing, abnormal expansion, development of cracks and collapse by alkali aggregate reaction; and
(4) Crazing and corrosion of reinforcing steel by freezing and thawing.

As measures to cope with these problems, there have hitherto been employed methods of impregnating the structures with aqueous or alcoholic colloidal silica, sodium silicate, potassium silicate or polymer dispersions, or applying organic polymer material-containing cement paste thereto. However, colloidal silica has the problem that its effects are gradually lessened by its effusion because of its very weak bonding power and adhesion. Sodium silicate and potassium silicate are poor in water resistance and acid resistance, and the organic polymers have a limitation on durability and weather resistance. As described above, when the concrete structures and the other cement structures are reinforced or repaired, all the conventional methods are not satisfactory in terms of the effect of inhibiting deterioration and durability, and excellent reinforced concrete structures have not been obtained yet in the present circumstances.

Further, the concrete structures and the other cement structures are liable to suffer natural staining because they are exposed to the open air, outdoors. To such natural staining, concrete structures and other cement structures excellent in self-cleaning properties have been desired.

### SUMMARY OF THE INVENITON

The present invention has been made against the background of the prior-art problems described above, and it is an object of the invention to provide a reinforcing method of a concrete structure which can improve the effect of inhibiting deterioration and durability by improvement in waterproofness, prevention of neutralization, inhibition of chlorine ion permeation, improvement in resistance to freezing and thawing, and an increase in mechanical strength.

Another object of the invention is to provide a reinforced concrete structure obtained by the method described above.

According to the present invention, there is provided a reinforcing method of a concrete structure comprising coating or impregnating a surface portion of the concrete structure with a composition containing (a) a quaternary ammonium silicate in an amount of 5 to 30 parts, in which SiO₂ is contained in an amount of 10% to 45% by weight, and (b) water in an amount of 95 to 70 parts, on a solid basis, wherein (a) + (b) = 100 parts by weight.

Further, the present invention provides a reinforcing method of a deteriorated concrete structure, comprising coating or impregnating a surface portion of the deteriorated concrete structure with the above-mentioned composition.

Still further, according to the present invention, there is provided a reinforced concrete structure obtained by the above-mentioned reinforcing method.

### BRIEF DESCRIPTION OF THE DRAWINGS

Fig. 1 shows sectional views of concrete samples indicating results of a carbonation prevention effect test;
Fig. 2 shows sectional views of concrete samples indicating results of a chlorine ion permeation prevention test; and
Fig. 3 is a graph showing the relationship between the number of freezing and thawing cycles and the bending strength of concrete samples.

### DESCRIPTION OF THE PREFERRED EMBODIMENTS

The concrete structure of the invention includes not only a concrete structure, but also other cement structures. The other cement structures include a formed article of a cement material, a formed plate thereof or a mortar-coated article.

The quaternary ammonium silicate (a), one ingredient of the composition used in the reinforcing method of the invention, is represented by the following general formula:

(R₃N)₂O·nSiO₂

wherein R is an alkyl group having one or more carbon atoms, and n is an integer of 1 or more.

Specific examples of the quaternary ammonium silicates (a) include liquid silicates such as dimethyldiethanolammonium silicate, monomethyltripropanol silicate, dimethyldi-propanolammonium silicate and monoethyltripropanolammonium silicate. These quaternary ammonium silicates (a) can be easily obtained by (1) a method of bringing diluted water glass into contact with hydrogen type cation exchange resins, adding quaternary ammonium hydroxides to the resulting active silica solutions, and concentrating the solutions to a specified concentration, or (2) a method of reacting quaternary ammonium hydroxides with silica hydrosols.

Here, the quaternary ammonium hydroxides are usually obtained by a method of adding alkylene oxides to ammonia or amines, or a method of deionizing quaternary amine salts with anion exchange resins. However, products containing tertiary, secondary or primary amines in small amounts can be used, and quaternary ammonium silicates obtained using them can also be used in the compositions of the invention.

The quaternary ammonium silicate (a) is required to contain SiO₂ in an amount ranging from 10% to 45% by weight, preferably from 20% to 30% by weight. Less than 10% by weight results in too large an amount of the composition used, or an increased amount of water to delay drying, whereas exceeding 45% by weight unfavorably causes weakened adhesion or development of cracks.

In the method of the invention, the ratio of ingredient
(a) is 5 to 30 parts by weight, and preferably 10 to 20 parts by weight, per 100 parts of the total of ingredients (a) and
(b) on a solid basis. Less than 5 parts by weight results in too large an amount of the composition used, whereas exceeding 30 parts by weight unfavorably causes weakened adhesion or poor permeability.

Water of ingredient (b) employed in the composition used in the method of the invention is an indispensable ingredient as a modifier for the solid content of the composition and a reaction rate regulator. As the water, there can be used tap water, distilled water and ion-exchanged water. Water contained in the aqueous silica sol comprising the quaternary ammonium silicate, ingredient (a), is also included.

The amount of such water (b) is 70 to 95 parts by weight, and preferably 75 to 90 parts by weight, based on 100 parts of the total of ingredients (a) and (b). Less than 70 parts by weight results in relatively too high a solid content, which weakens adhesion or deteriorates permeability. On the other hand, exceeding 95 parts by weight results in too low a solid content, which unfavorably causes failure to exhibit the desired performance or leads to too large an amount of the composition used.

The composition used in the invention may contain a surfactant. The surfactant is an agent having a hydrophilic group and a hydrophobic group together, performing surface active functions ((1) adsorption and micelle formation, (2) wetting and permeation, and (3) emulsification and decomposition), and used as a main component of an ordinary detergent. As the surfactant, all of the ordinary surfactants can be used, and examples thereof include anionic surfactants, cationic surfactants, nonionic surfactants, amphoteric surfactants and silicon surfactants.

When the surfactant is used, the concentration of the surfactant in the composition is preferably 0.1 to 1.0 part by weight, and more preferably 0.2 to 0.5 part by weight, based on 100 parts by weight of the total of ingredients (a) and (b) . Less than 0.1 part by weight results in lack of the desired performance, whereas exceeding 1.0 part by weight unfavorably causes weakened adhesion or delayed reaction.

The compositions used in the invention may optionally contain other additives such as inorganic pigments, dyes, synthetic resin emulsions, water-soluble resins, colloidal metal oxides, ethylene glycol and alcohols.

The compositions used in the invention are prepared by mixing ingredients (a) and (b) and optionally the other additives.

In this case, the compositions used in the invention are dispersed with a stirrer or another dispersing apparatus, thereby being able to form homogeneous and stable dispersions.

In the invention, when the surface portion of the concrete structure is coated or impregnated with the composition mainly containing ingredients (a) and (b), the composition react with calcium hydroxide of a cement ingredient to provide a high-density calcium silicate layer. Therefore, the density and the hardness are significantly enhanced to improve permeability and water absorption, so that carbon dioxide can be prevented from invading, and neutralization caused thereby can be inhibited. Nitrogen oxides or sulfates can also be prevented from invading, and erosion caused thereby can be prevented. Further, the reactivity with carbon dioxide is reduced, and the hardness and the physical strengths such as cleavage strength can also be improved. Furthermore, the performance to freezing and thawing is also improved.

In the case of the deteriorated concrete structure, neutralization has progressed. Accordingly, alkalization can be accelerated by coating or impregnating the surface portion of the deteriorated concrete structure with the composition of the invention, which is alkaline (the pH is about 11 to about 12). Then, the density and the hardness are improved, and the physical strengths are recovered to repair the concrete structure. At the same time, further deterioration can be prevented to reinforce the concrete structure.

Such reaction is represented by the following reaction schemes (1) and (2):

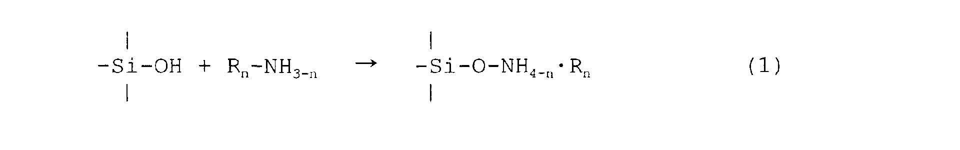

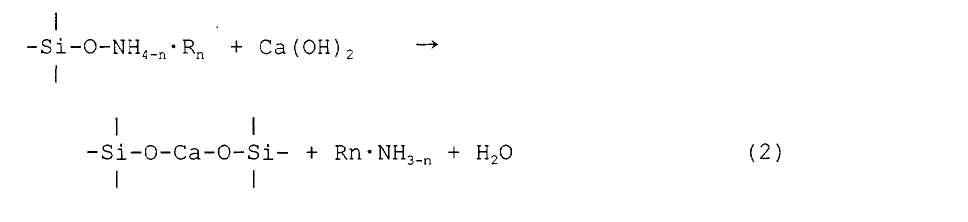

In the above-mentioned reaction schemes (1) and (2), R represents an alkyl group having one or more carbon atoms, such as methyl, ethyl and butyl, and n is an integer of 1 to 3.

A surface of the concrete structure to be subjected to application of the composition of the invention is coated with the composition using a brush, a spray or a roller, or immersed therein, preferably in an amount of 40 to 400 g, more preferably 50 to 300 g, per square meter. On a solid basis, the composition is deposited preferably in an amount of 4 to 80 g, more preferably 6 to 50 g per square meter.

The composition can also be applied to the surface of the concrete structure in several parts by coating or immersion. Less than 4 g on a solid basis results in the difficulty of achieving the desired effects, because of too small an amount of the composition. On the other hand, exceeding 80 g unfavorably leads to weakened adhesion or pulverization.

In the invention, after application of the above-mentioned composition, drying and hardening are preferably conducted at ordinary temperature. Low-temperature heating treatment or steam treatment can also be carried out. The temperature of low-temperature heating is 60 to 120°C, and preferably 70 to 100°C. The hardening time is 1 to 3 hours at ordinary temperature, and 1 to 30 minutes at a temperature of 60 to 120°C. Further, it is possible to increase the thickness of the composition layer.

In the method of the invention, the concrete structure is one mainly comprising a cement material, and means any of structures obtained by mixing the cement material with other ingredients such as fine aggregates, gravel and water as needed. The concrete structure also includes structures obtained from other cement materials.

According to the method of the invention, newly constructed concrete structures can be reinforced to provide the reinforced concrete structures, and deteriorated concrete structures can also be repaired and reinforced.

The method of the invention has the marked effects such as (1) improvement in waterproofness, (2) prevention of neutralization, (3) inhibition of chlorine ion permeation, (4) improvement in resistance to freezing and thawing, and (5) an increase in mechanical strength, on the concrete structures, and can greatly contribute to the reinforcement and deterioration prevention of the concrete structures. Further, the method of the invention can improve resistance to natural staining (self-cleaning properties) by imparting surface hydrophilicity to the concrete structures. Furthermore, the present invention gives the great effects as the method for repairing and reinforcing deteriorated concrete structures, and the industrial and social significance thereof is very profound.

The invention will be illustrated with reference to examples in more detail below, but the following examples are not intended to limit the scope of the invention.

Parts and percentages in the examples and comparative examples are on a weight basis, unless otherwise specified.

### REFERENCE EXAMPLES 1 to 3

Three kinds of compositions (A) to (C) shown in Table 1 were prepared.

Each of the above-mentioned compositions was prepared by placing in a stirring tank ingredients (a) and (b) and optionally ingredient (c) shown in Table 1, and lightly stirring them, followed by filtration.

### Symbols used in Table 1 indicate the following:

(a-1) Quaternary ammonium silicate, NS-20 (SiO₂ concentration = about 20%), manufactured by KABUSHIKI KAISHA NIPPANKENKYUSHO;
(a-2) Quaternary ammonium silicate, Cas 25 (SiO₂ concentration = about 25%), manufactured by Nissan Chemical Industries, Ltd.;
(b) Tap water; and
(c) Nonionic surfactant, trade name: Nonipole, manufactured by Sanyo Chemical Industries, Ltd.

**TABLE 1**

| Reference Example | 1 | 2 | 3 |
|---|---|---|---|
| Kind of Composition | A | B | C |
| Compounding Formulation (parts) | | | |
| (a-1) | 50 | - | 100 |
| (a-2) | - | 60 | - |
| (b) | 50 | 40 | - |
| Total (parts) | 100 | 100 | 100 |
| (c) | - | 0.2 | 0.5 |

### REFERENCE EXAMPLE 4 (Preparation of Concrete Samples)

Fifty mortar samples with dimensions of 40 by 40 by 160 mm were prepared in the following manner. That is to say, commercially available ordinary Portland cement, commercially available river sand (having a size of 5 mm or less) as a fine aggregate and water were mixed so as to give a weight compounding ratio (cement (C)/water (W)/sand (S)) of 1/0.65/2.5, and the resulting mixture was poured into a mold, followed by drying and hardening. The mortar thus obtained was cured in water at 20°C for 28 days.

### EXAMPLES 1 TO 3

Onto the samples obtained as described above, compositions A, B and C prepared in Reference Example 1 to 3 were each applied with a brush as shown in Table 2, thereby preparing samples for evaluation tests.

### CONTROL EXAMPLE 1

The samples obtained in Reference Example 4 were used as control samples as such.

### Water Absorption Test

The samples obtained in Examples 1 to 3 and the control samples were immersed in water at 20°C for 1, 3 and 10 days, respectively, and the water absorption of the respective samples was determined from changes in mass. Results thereof are shown in Table 2.

The results shown in Table 2 reveal that the concrete samples of the invention coated with compositions A, B and C or immersed therein are lower in water absorption than the untreated concrete samples of Control Example 1.

### Carbonation (Neutralization) Prevention Effect Confirming Test

For examining the carbonation prevention effect, the samples were placed in a copper vessel, and the vessel was filled with carbon dioxide gas (CO₂). The gas pressure was adjusted to 3 kg/cm², and that state was maintained for 14 hours. Thus, the neutralization-accelerating test of the samples was conducted. After the accelerating test, each sample was broken at right angles to a longitudinal direction. The whole surface of the broken section was coated with a phenolphthalein indicator, and an alkalinity-retaining region (Ca(OH)₂) and a carbonated region (CaCO₃) were examined by the presence or absence of changes in color to red.

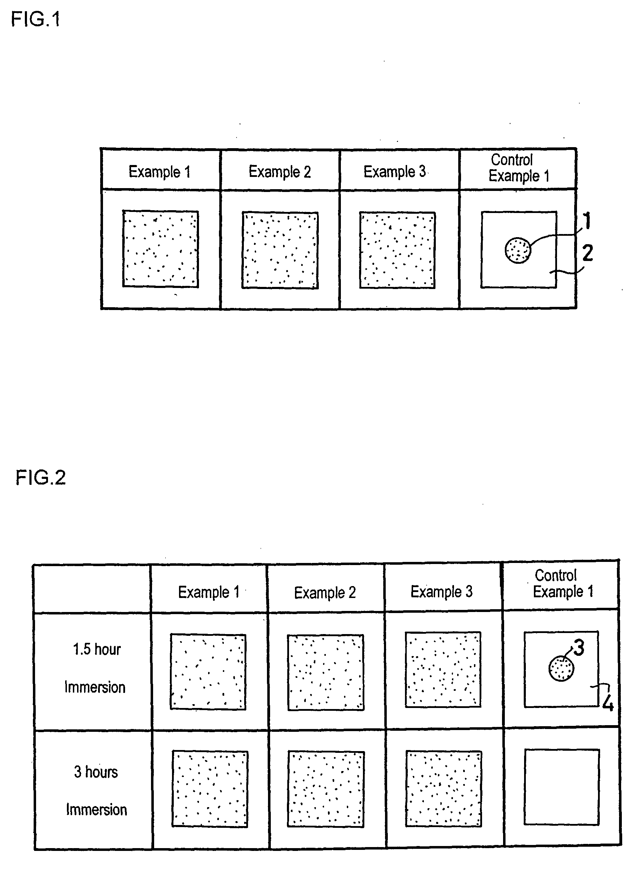

Fig. 1 shows sections of the samples cut at right angles to a longitudinal direction, and coated with the phenolphthalein indicator. A dotted region 1 of the section indicates the alkalinity-retaining region, and a blank region 2 indicates the carbonated region. In the untreated concrete of Control Example 1, neutralization has proceeded to a depth of about 12 mm to about 14 mm from the surface. Contrarily, in the concrete samples of Examples 1 to 3, no neutralized regions have been observed at all. This reveals that the invention has the significant effect on carbonation prevention.

### Test for Confirming Chlorine Ion Permeation Prevention Effect

The samples were immersed in brine for 1.5 hours and 3 hours, respectively, and then, taken out. Each sample was broken at right angles to a longitudinal direction. Chlorine ions that permeated from a surface of the broken section were detected, and a brine permeation region was examined by the depth where the chlorine ions were detected. Silver nitrite and fluorescein were used for the detection of the chlorine ions, and a distinction was made by a color-changed region. Results thereof are shown in Fig. 2. Fig. 2 shows sections of the samples cut at right angles to a longitudinal direction, and coated with silver nitrite and fluorescein to be changed in color. In Fig. 2, a dotted region 3 indicates a region where no chlorine was detected, and a blank region 4 indicates a region where chlorine was detected.

In the untreated concrete of Control Example 1, it was confirmed that chlorine permeated to a depth of about 15 mm from the surface 1.5 hours after immersion in brine, and to a center of the section 3 hours after immersion. However, in the samples of Examples 1 to 3, no chlorine was detected in the section at all even 3 hours after immersion. Further, no chlorine was detected in the section at all even 7 days after immersion. This reveals that the method of the invention is excellent in the effect of preventing the permeation of chlorine ions.

### Physical Strength Tests

For examining the physical strengths of the samples, compressive strength, Schmidt hammer strength and surface hardness (micro Vickers hardness) tests were conducted. The compressive strength was evaluated in accordance with JIS 1108, the Schmidt hammer strength was evaluated in accordance with JSCE G504, and the surface hardness (micro Vickers hardness) was evaluated with a micro Vickers hardness tester (equipment name: scratch tester). Results thereof are shown in Table 2. The results indicate that all the samples of Examples 1 to 3 are improved in both the strengths and the surface hardness, compared with the untreated concrete of Control Example 1.

**TABLE 2**

| | Example | | | Control Example 1 |
|---|---|---|---|---|
| | 1 | 2 | 3 | |
| Preparation of Material for Evaluation Test | | | | |
| Kind of Composition | A | B | C | Not used |
| Coating Method | Brush Double coating | Brush Double Coating | Immersion 3 hours | - |
| Average Amount Coated (g/cm²) | 0.13 | 0.14 | 0.16 | - |
| Evaluation of Water Absorption | | | | |
| Water Absorption (%) | | | | |
| First Day | 3.9 | 4.0 | 3.7 | 7.4 |
| Second Day | 4.0 | 4.2 | 3.8 | 7.5 |
| Tenth Day | | | | |
| Evaluation of Physical Strengths | 4.1 | 4.2 | 3.8 | 7.5 |
| Compressive Strength (N/mm²) | 33.6 | 32.8 | 33.3 | 26.4 |
| Schmidt Hammer Strength (N/mm²) | 34.8 | 35.2 | 35.1 | 28.3 |
| Micro Vickers Hardness (HV) | 43.0 | 42.6 | 43.7 | 23.5 |

### Test of Resistance to Freezing and Thawing

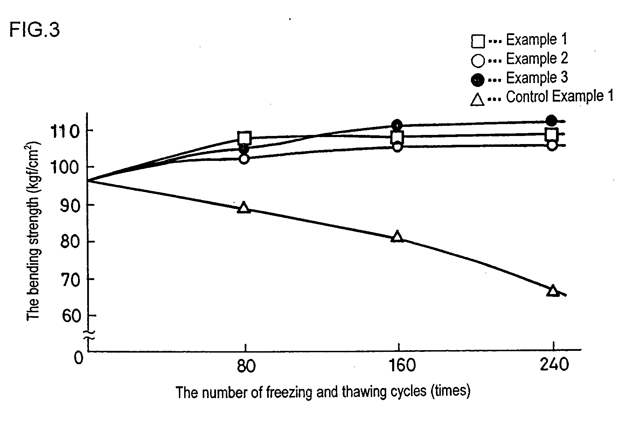

The resistance to freezing and thawing of the samples was evaluated by ASTM C666-77. The relationship between the number of freezing and thawing cycles and the bending strength (kgf/cm²) is shown in Fig. 3. In the untreated concrete of Control Example 1, the repetition of freezing and thawing results in a reduction in bending strength. However, all the samples of Examples 1 to 3 of the invention are not reduced in bending strength, even when freezing and thawing are repeated. This reveals that the samples of the invention are excellent in resistance to freezing and thawing.

### Test of Resistance to Natural Staining

The concrete samples of Examples 1 to 3 of the invention and Control Example 1 were placed on a roof of a building along a national road where the traffic is heavy, with their coated faces made perpendicular, and allowed to stand and exposed for 120 days to conduct a test of resistance to natural staining.

As a result of the test of resistance to natural staining, the concrete samples of Examples 1 to 3 were scarcely stained, compared with the samples not subjected to the test, and the difference between them was hardly distinguishable. On the other hand, the concrete of Control Example 1 was apparently stained, and showed a spotted blackish gray color due to staining.

### REFERENCE EXAMPLE 5 (Preparation of Deteriorated Concrete Samples)

Mortar samples with dimensions of 40 by 40 by 160 mm were prepared in the same manner as with Reference Example 4 with the exception that the mortar was allowed to stand indoors without curing at 20°C for 28 days.

The above-mentioned mortar samples were dried by heating in a drying chamber at 100°C for 6 hours, and then, placed in a copper vessel. The vessel was filled with carbon dioxide gas (CO₂), the gas pressure was adjusted to 3 kg/cm², and that state was maintained for 14 hours. The samples were further immersed in a 0.5% sulfuric acid solution for 24 hours, followed by drying by heating in a drying chamber at 100°C for 6 hours.

### EXAMPLES 4 AND 5

Onto the samples obtained in Reference Example 5, compositions A and B obtained in Reference Example 1 and 2 were each applied with a brush as shown in Table 3, thereby preparing deteriorated concrete samples for evaluation tests.

### CONTROL EXAMPLE 2

The samples obtained in Reference Example 4 were used as control samples as such.

### Physical Strength Test of Deteriorated Concrete

The deteriorated concrete samples of Examples 4 and 5 obtained as described above and the untreated deteriorated concrete samples of Control Example 2 were subjected to the Schmidt hammer strength test, the needle penetration test and the pencil hardness test. The needle penetration was evaluated using a Mackgauge penetrometer, and the pencil hardness was evaluated in accordance with JIS K-5600. 5. 4 (pencil method) . Results thereof are shown in Table 3. The samples of Examples 4 and 5 in which the deteriorated concrete samples were coated with the compositions of the invention, respectively, are improved in all the strength, needle penetration and hardness, compared with the control samples, which indicates that the compositions of the invention can repair and reinforce the deteriorated concrete.

**TABLE 3**

| | Example 4 | Example 5 | Control Example 2 |
|---|---|---|---|
| Preparation of Material for Evaluation Test | | | |
| Kind of Composition | A | B | Not used |
| Coating Method | Brush Triple coating | Brush Triple Coating | - |
| Average Amount Coated (g/cm²) | 0.22 | 0.25 | - |
| Evaluation of Physical Strength | | | |
| Schmidt Hammer Strength (kg/cm²) | 555 | 549 | 412 |
| Needle Penetration (µm) | 8 | 8 | 27 |
| Pencil Hardness (H) | 9 or more | 9 or more | 3~4 |

## Claims

1. A reinforcing method of a concrete structure, comprising coating or impregnating a surface portion of the concrete structure with a composition containing (a) a quaternary ammonium silicate in an amount of 5 to 30 parts, in which SiO₂ is contained in an amount of 10% to 45% by weight, and (b) water in an amount of 95 to 70 parts, on a solid basis, wherein (a) + (b) = 100 parts by weight.

2. The method according to claim 1, in which said quaternary ammonium silicate is represented by (R₃N)₂O·nSiO₂, wherein R is an alkyl group having one or more carbon atoms, and n is an integer of 1 or more.

3. The method according to claim 1 or 2, in which said concrete structure is a deteriorated concrete structure.

4. The method according to any one of claims 1 to 3, in which said concrete structure is reinforced concrete or at least one cement structure selected from the group consisting of a formed article of a cement material, a formed plate thereof and a mortar-coated article.

5. The method according to any one of claims 1 to 4, in which after the coating or the impregnation, drying and hardening at ordinary temperature, low-temperature heating treatment at 60 to 120°C for 1 to 3 hours, or steam treatment is carried out.

6. A reinforced concrete structure obtained by the method according to any one of claims 1 to 5.
